(19) Europäisches Patentamt

European Patent Office

Office européen des brevets

(11) **EP 0 994 556 A1**

(12) **DEMANDE DE BREVET EUROPEEN**

(43) Date de publication:
**19.04.2000 Bulletin 2000/16**

(51) Int. Cl.⁷: **H02M 3/07**

(21) Numéro de dépôt: **99203233.4**

(22) Date de dépôt: **04.10.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **13.10.1998 FR 9812819**

(71) Demandeur:
**Koninklijke Philips Electronics N.V.**
**5621 BA  Eindhoven (NL)**

(72) Inventeurs:
• **Rudelle, Marie-Irène**
**75008 Paris (FR)**
• **Jean, Patrick**
**75008 Paris (FR)**

(74) Mandataire: **Lottin, Claudine**
**Société Civile S.P.I.D.**
**156, Boulevard Haussmann**
**75008 Paris (FR)**

(54) **Dispositif semiconducteur incluant un circuit integré pour réaliser un conventisseur de tension continué**

(57)   Dispositif semiconducteur incluant un circuit intégré ayant une première tension de polarisation continue ($V_{DD}$), pour réaliser un convertisseur de tension continue, ce circuit intégré comprenant des éléments de circuit ayant une fonction d'oscillateur pour générer un signal alternatif à partir de ladite première tension de polarisation continue et des éléments de circuit ayant une fonction de redresseur pour générer à partir du signal alternatif redressé une seconde tension de polarisation continue ($V_{OUTP}$) de signe opposée à celui de la première tension de polarisation, les éléments de circuit ayant les fonctions d'oscillateur et de redresseur étant interdépendants les uns des autres. Le circuit intégré comprend, pour réaliser la fonction oscillateur, deux étages amplificateurs (T1,L1 ; T2,L2) à transistors à effet de champ (T1, T2) montés en différentiel avec leurs sources (S1, S2) communes à la masse, produisant un signal alternatif, et comprend, pour réaliser la fonction redresseur, deux étages redresseurs (Δ3,T1 ; Δ4,T2) simple alternance associés en parallèle qui chacun redresse les alternances du signal alternatif en opposition de phase.

   Application : Appareils portables de transmission

**Description**

L'invention concerne un dispositif semi-conducteur incluant un circuit intégré pour réaliser un convertisseur de tension continue.

L'invention trouve son application dans l'industrie de fabrication des dispositifs semi-conducteurs incluant des circuits intégrés utilisés dans les téléphones mobiles et sans fils, et dans les appareils portables en général.

Pour les appareils portables en général, l'alimentation électrique est fournie par des piles sous forme de tension continue positive. Ces appareils portables peuvent comprendre une fonction de transmission téléphonique (émission - réception) et de nombreuses autres fonctions. Un nombre de ces fonctions est assuré par l'emploi de circuits intégrés qui nécessitent très souvent d'une part une tension de polarisation continue positive fournie par la tension continue des piles et d'autres part par une tension de polarisation négative qu'il faut générer.

Un générateur de plusieurs tensions continues est déjà connu de la demande de brevet EP 0 176 823. Ce document décrit un circuit redresseur à diodes appliqué à une tension alternative fournie par l'enroulement secondaire d'un transformateur dont l'enroulement primaire est connecté au réseau de distribution standard.

Pour fournir deux tensions continues de signe opposé et dont l'une a une valeur différente de l'autre, soit le circuit comporte deux tensions alternatives provenant de deux enroulements secondaires du transformateur et un seul redresseur formé de quatre diodes et de deux capacités plus des capacités de liaison, soit le circuit comporte une seule tension alternative provenant d'un seul enroulement secondaire et deux circuits redresseurs montés en série ou en parallèle, ce qui nécessite huit diodes et quatre capacités, compte non tenu de capacités de liaison supplémentaires. Ce dispositif n'est pas entièrement intégrable, il nécessite un raccordement

au réseau alternatif et l'utilisation d'un transformateur encombrant, et en outre le circuit lui-même comporte un nombre augmenté de composants si la dimension du transformateur est réduite.

La présente invention a pour but de fournir un dispositif semiconducteur incluant un circuit complètement intégré apte à fournir une tension continue négative à partir de l'alimentation continue positive fournie par des piles ou des batteries standards.

Ce but est atteint par un dispositif selon la revendication 1.

Ce dispositif a pour avantage d'être complètement intégrable dans la technologie des circuits intégrés hyperfréquences actuellement utilisée dans les téléphones portables et sans fils, du type MMICs (de l'anglais Monolithic Microwave Integrated Circuits) et les autres appareils portables. Ceci n'était jusqu'à présent pas le cas des dispositifs convertisseurs de tension continue connus qui étaient externes au dispositif semi-conducteur intégré. Les diverses tensions continues nécessaires au fonctionnement des circuits MMICs étaient générées à l'extérieur des MMICs.

Ce dispositif a aussi pour avantage, outre d'être intégrable sur le substrat des MMICs, de générer une tension continue négative à partir de la propre tension de polarisation positive des MMICs. Il en résulte que ce dispositif est simplement alimenté en même temps que les MMICs par la pile ou batterie standard des appareils portables incluant ces MMICs.

D'une manière générale, l'invention trouve son application dans tout circuit intégré ayant des étages alimentés à la fois par une tension négative et une tension positive.

L'invention est décrite ci-après en détail en référence à la figure schématique annexée qui est:

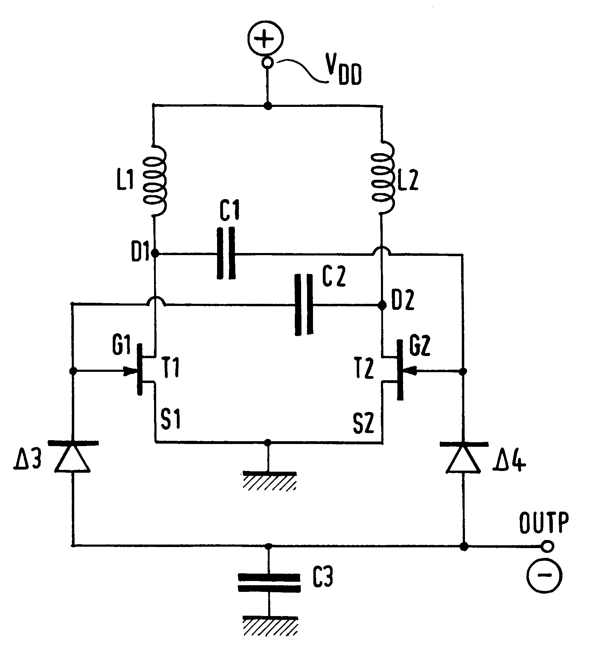

- la FIG.1 qui représente le schéma du circuit convertisseur de tension continue.

Le circuit convertisseur de tension continue comprend des moyens constitués par un circuit intégré pour convertir la tension continue positive fournie par une pile ou batterie standard disponible sur une borne notée $V_{DD}$, en une tension continue négative disponible sur une borne notée OUTP. La tension continue positive est utilisée pour réaliser la tension de polarisation positive d'un circuit intégré de préférence sur le même substrat que le circuit convertisseur de tension continue. La tension continue négative qui est générée sur la borne OUTP est utilisée pour réaliser une tension de polarisation négative de ce circuit intégré. En effet, lorsqu'un circuit intégré est réalisé au moyen de transistors à effet de champ, la polarisation du drain des transistors nécessite souvent une tension continue positive et la polarisation de grille une tension continue négative.

Ce circuit convertisseur de tension continue est constitué d'éléments de lignes, de capacités, de diodes et de transistors à effet de champ tous compatibles avec la technologie des circuits hyperfréquences monolithiquement intégrés sur un substrat. De nos jours, ces circuits, notés MMICs, sont favorablement réalisés sur un substrat semi-isolant en arséniure de gallium, sur lequel est réalisé un empilement de couches de matériaux du groupe chimique III-V dans lequel les éléments du circuit sont réalisés par des étapes incluant par exemple une technique de photolithographie. Ces circuits MMICs fonctionnent dans le domaine des hyperfréquences pour les applications aux télécommunications comme cité plus haut. Ces circuits sont extrêmement compacts et favorables à l'insertion dans un appareil de transmission portable.

Le circuit convertisseur de tension continue représenté sur la FIG.1 comporte d'abord deux selfs L1 et L2 de mêmes valeurs connectées par une de leurs extrémités à la borne $V_{DD}$ d'alimentation continue positive et par leurs autres extrémités à des noeuds notés D1 et D2 respectivement.

Le circuit de la FIG.1 comporte ensuite deux transistors à effet de champ notés T1 et T2. Le drain D1 du transistor T1 constitue le noeud D1 de connexion à la self L1. Le drain D2 du transistor T2 constitue le noeud D2 de connexion à la self L2. Les sources S1 et S2 respectivement des transistors T1 et T2 sont communes et connectées à la masse.

La grille G1 du transistor T1 est reliée à travers une capacité C2, au drain D2 du transistor T2. La grille G2 du transistor T2 est reliée à travers une capacité C1 au drain D1 du transistor T1. Les capacités C1 et C2 n'ont pas d'autre fonction que d'être des capacités d'isolation en continu.

La borne de sortie du circuit, notée OUTP, est connectée d'une part à la masse à travers une capacité C3 d'isolation en continu, et d'autre part à chacune des grilles respectivement G1 et G2 à travers des diodes notées respectivement $\Delta 3$ et $\Delta 4$.

Le circuit décrit ci-dessus forme à la fois un oscillateur et un redresseur. Chacune des parties de circuit à fonction oscillateur ou redresseur utilise des éléments intrinsèques, capacités ou diodes intrinsèques des transistors à effet de champ T1 et T2, et donc le circuit ne peut pas être séparé en une partie de circuit à fonction purement oscillateur et une partie de circuit à fonction purement redresseur. Ces parties sont interdépendantes.

Il faut noter que la partie de circuit à fonction d'oscillateur n'est pas chargée de générer un signal alternatif à une fréquence qui serait prédéterminée dans un but précis. Il suffit que le circuit génère un signal alternatif de fréquence élevée.

La partie de circuit à fonction d'oscillateur comprend l'association des selfs L1 et L2 et des capacités intrinsèques grilles - sources notées $C_{GS1}$, $C_{GS2}$ des transistors respectivement T1, T2. Les valeurs choisies pour les selfs L1 et L2 sont accordées sur les valeurs des capacités intrinsèques $C_{GS2}$, $C_{GS1}$ qui dépendent du choix des transistors T2 et T1 respectivement. Comme ces capacités intrinsèques $C_{GS1}$ et $C_{GS2}$ sont petites, la fréquence obtenue pour le signal alternatif est élevée. Comme dit plus haut, les capacités de liaison C1 et C2 n'ont pas d'influence sur la fréquence d'oscillation.

Pour réaliser la partie de circuit à fonction d'oscillateur, on tire donc avantage des propriétés intrinsèques des transistors à effet de champ T1 et T2.

Les transistors T1 et T2 associés aux selfs L1 et L2 forment deux amplificateurs qui sont branchés de telle sorte que, en alternatif, l'entrée G1 du premier transistor T1 est reliée à la sortie D2 du deuxième transistor T2, et que l'entrée G2 du deuxième transistor T2 est reliée à la sortie D1 du premier transistor T1.

Dans ces conditions le bruit du circuit qui est amplifié crée l'instabilité suffisante du circuit pour produire la fonction oscillateur. La tension alternative générée dans cette partie de circuit se superpose à la tension continue $V_{DD}$.

Le circuit convertisseur de tension continue comporte ensuite une partie de circuit à fonction de redresseur. Pour effectuer la fonction redresseur, la diode $\Delta 3$ associée à la diode intrinsèque du transistor T1 redresse une première alternance du signal alternatif, et la diode $\Delta 4$ associée à la diode intrinsèque du transistor T2 redresse la deuxième alternance du signal alternatif. En effet, dans ce circuit une alternance positive du signal alternatif se présente à un instant sur la branche $\Delta 3$, T1 et une demi - période plus tard, une autre alternance positive se présente sur la branche $\Delta 4$, T2.

Ainsi, l'oscillateur étant en mode différentiel, la première alternance positive qui se présente est redressée par la diode A3 et le transistor T1 montés dans la branche gauche du circuit sur la FIG.1, et une demi - période plus tard, la seconde alternance positive qui se présente est redressée par la diode $\Delta 4$ et le transistor T2 sur la branche droite du circuit sur la FIG.1. Les branches $\Delta 3$, T1, et $\Delta 4$, T2 fonctionnent à tour de rôle.

Ce circuit constitue ainsi l'association de deux redresseurs simple alternance avec des sorties associées en parallèle, appliqués sur des signaux d'entrée en opposition de phase.

Ce circuit permet d'obtenir sur la borne OUTP une tension continue négative de valeur notée $V_{OUTP}$ par rapport au signal continu de valeur notée $V_{DD}$ disponible sur la borne $V_{DD}$ tel que :

$$V_{OUTP} \approx - 2 V_{DD}$$

En général $V_{DD}$ est de l'ordre de $V_{DD} = 3V$ qui est une tension de pile standard d'où il résulte que :

$$V_{OUTP} = - 6V$$

Ce signal $V_{OUTP}$ est favorablement utilisé pour polariser les grilles des transistors à effet de champ utilisés dans les MMICs incorporés dans des dispositifs semi-conducteurs et inclus dans des appareils portables.

Si l'on désire une très faible consommation, ce circuit peut être réalisé avec des transistors de plus faible puissance, qui produisent une plus faible amplification de telle manière que pour :

$$V_{DD} = 3V$$

il en résulte que $V_{OUTP} = -3V$

Donc en fonction de la puissance des transistors, qui ont des éléments intrinsèques sur lesquels on accorde les selfs de drain L1 et L2, l'homme du métier peut sans peine obtenir une valeur $V_{OUTP}$ donnée prédéterminée en fonction de $V_{DD}$.

Un tel circuit convertisseur de tension continue inclus dans un dispositif semiconducteur est favorablement utilisé dans un appareil portable alimenté par une pile ou une batterie.

Un tel circuit convertisseur de tension continue inclus dans un dispositif semiconducteur est par exemple favorablement utilisé dans un appareil portable du type téléphone mobile alimenté par une pile ou une batterie.

Un tel circuit convertisseur de tension continue inclus dans un dispositif semiconducteur est par exemple favorablement utilisé dans un appareil portable du type téléphone sans fil alimenté par une pile ou une batterie.

Un tel circuit convertisseur de tension continue inclus dans un dispositif semiconducteur est par exemple favorablement utilisé dans un appareil portable du type calculateur avec un processeur pour effectuer des fonctions d'ordinateur personnel par exemple avec transfert d'informations par télécommunication, alimenté par pile ou batterie.

**Revendications**

1. Dispositif semiconducteur incluant un circuit intégré ayant une première tension de polarisation continue, pour réaliser un convertisseur de tension continue, ce circuit intégré comprenant des éléments de circuit ayant une fonction d'oscillateur pour générer un signal alternatif à partir de ladite première tension de polarisation continue et des éléments de circuit ayant une fonction de redresseur pour générer à partir du signal alternatif redressé une seconde tension de polarisation continue de signe opposée à celui de la première tension de polarisation, les éléments de circuit ayant les fonctions d'oscillateur et de redresseur étant interdépendants les uns des autres.

2. Dispositif selon la revendication 1, où le circuit intégré comprend, pour réaliser la fonction oscillateur, deux étages amplificateurs à transistors à effet de champ montés en différentiel avec leurs sources communes à la masse, produisant un signal alternatif, et comprend, pour réaliser la fonction redresseur, deux étages redresseurs simple alternance associés en parallèle qui chacun redresse les alternances du signal alternatif en opposition de phase.

3. Dispositif selon la revendication 2, où les étages amplificateurs comprennent chacun un transistor à effet de champ dont le drain est alimenté par la première tension de polarisation continue à travers une self accordée sur la capacité grille - source du transistor correspondant, chaque transistor ayant en outre sa sortie connectée à l'entrée de l'autre transistor pour fournir un signal alternatif porté par la première tension de polarisation.

4. Dispositif selon la revendication 3, où les étages redresseurs simple alternance comprennent chacun une diode montée entre la masse et l'entrée d'un des transistors amplificateurs et associée à la diode intrinsèque de transistor pour redresser à chaque demi - période, tour à tour, une alternance du signal alternatif généré par les étages amplificateurs.

5. Dispositif semi-conducteur selon l'une des revendications 1 à 4, où le circuit intégré comporte au moins un élément de circuit du type hyperfréquences monolithiquement intégré sur un substrat (MMIC)

6. Dispositif selon la revendication 5 où le substrat est un matériau semi-isolant du groupe III-V et où les éléments de circuit sont intégrés dans un empilement de couches de matériaux III-V réalisé sur ce substrat.

7. Appareil portable alimenté par une pile ou une batterie et incorporant au moins un dispositif semiconducteur selon l'une des revendications 1 à 4, où selon l'une des revendications 5 ou 6.

8. Appareil portable du type téléphone mobile alimenté par une pile ou une batterie et incorporant au moins un dispositif semi-conducteur selon l'une des revendications 1 à 4, ou selon l'une des revendications 5 ou 6.

9. Appareil portable du type téléphone sans fil alimenté par une pile ou une batterie et incorporant au moins un dispositif semi-conducteur selon l'une des revendications 1 à 4, ou selon l'une des revendications 5 ou 6.

10. Appareil portable du type calculateur avec un processeur pour effectuer des fondions d'ordinateur personnel avec transfert d'informations par télécommunication, alimenté par pile ou batterie et incorporant au moins un dispositif semi-conducteur selon l'une des revendications 1 à 4, ou selon l'une des revendications 5 ou 6.

Office européen
des brevets
**RAPPORT DE RECHERCHE EUROPEENNE**

Numéro de la demande
EP 99 20 3233

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 306 954 A (CHAN PAUL S ET AL) 26 avril 1994 (1994-04-26) | 1,2,7-10 | H02M3/07 |
| A | * abrégé; figure * | 3-6 | |
| | --- | | |
| X | US 5 237 209 A (BREWER ROBERT J) 17 août 1993 (1993-08-17) | 1,2,7-10 | |
| A | * abrégé; figure * | 3-6 | |
| | --- | | |
| X | US 4 897 774 A (BINGHAM DAVID ET AL) 30 janvier 1990 (1990-01-30) | 1,2,7-10 | |
| A | * abrégé * | 3-6 | |
| | --- | | |
| D,A | EP 0 176 823 A (THOMSON BRANDT GMBH) 9 avril 1986 (1986-04-09) * abrégé * | 1-10 | |
| | ----- | | |

|  |
|---|
| DOMAINES TECHNIQUES RECHERCHES (Int.Cl.7) |
| H02M |

Le présent rapport a été établi pour toutes les revendications

| Lieu de la recherche | Date d'achèvement de la recherche | Examinateur |
|---|---|---|
| LA HAYE | 5 janvier 2000 | Lampe, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 0 994 556 A1

## ANNEXE AU RAPPORT DE RECHERCHE EUROPEENNE
## RELATIF A LA DEMANDE DE BREVET EUROPEEN NO.

EP 99 20 3233

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-01-2000

| Document brevet cité au rapport de recherche | Date de publication | Membre(s) de la famille de brevet(s) | Date de publication |
|---|---|---|---|
| US 5306954 A | 26-04-1994 | AUCUN | |
| US 5237209 A | 17-08-1993 | WO 9318573 A | 16-09-1993 |
| US 4897774 A | 30-01-1990 | US 4809152 A | 28-02-1989 |
| | | US 4636930 A | 13-01-1987 |
| | | US 4679134 A | 07-07-1987 |
| | | US 4999761 A | 12-03-1991 |
| | | US 4777577 A | 11-10-1987 |
| EP 0176823 A | 09-04-1986 | DE 3434272 A | 20-03-1986 |